# EUROPEAN PATENT SPECIFICATION

(11) **EP 4 178 484 B1**
(45) Date of publication and mention of the grant of the patent: **16.04.2025**
(21) Application number: 21746351.2
(22) Date of filing: 06.07.2021
(51) Int. Cl.: A61C 17/22, A46B 3/06, A46B 9/02

(54) **ELECTRIC TOOTHBRUSH HEAD**
ELEKTRISCHER ZAHNBÜRSTENKOPF
TÊTE DE BROSSE À DENTS ÉLECTRIQUE

(30) Priority: 09.07.2020 GB 202010533
(43) Date of publication of application: 17.05.2023
(73) Proprietor: Haleon UK IP Limited, Weybridge, Surrey KT13 0NY (GB)
(72) Inventor: MÜLLER, Wolf-Dieter, 77815 Bühl (DE); STUBBS, Tim, Warwick, CV34 4AB (GB)
(74) Representative: Haleon Patent Department
(86) International application number: PCT/EP2021/068675
(87) International publication number: WO 2022/008517

(56) References cited:
- EP-B1- 2 568 850
- KR-A- 20200 030 203
- US-A1- 2014 310 901
- US-A1- 2018 078 351
- US-A1- 2019 029 407

## Description

### Field of the Invention

This invention relates to an improved toothbrush head for an electric toothbrush comprising a tufted hemisphere, or sphere, and in particular to a tufted hemisphere, or sphere, of a construction which enables reduced size of the toothbrush head.

### Background of the Invention

European patent EP 2,142,138 B1 describes a toothbrush which comprises a substantially spherical brush comprising two substantially hemispherical sections separated from one another by a channel and drive means extending through the channel and adapted to impart at least first and second independent brushing motions to the head. EP2568850B1 discloses a toothbrush drive system comprising a spherical brush head. US2019/0029407 discloses templates for forming a tufted curved surface such as a hemispherical toothbrush head. KR20200030203 discloses a method for manufacturing a toothbrush. US2018/078351 discloses a toothbrush head comprising a substantially hemispherical body from which the cleaning elements extend. US2014/0310901 discloses a manual toothbrush having oral hygiene elements arranged in polygons.

Applicant has found that a toothbrush comprising such a spherical brush should be no more than a certain size to enable comfortable use and effective cleaning of all teeth. It is an object of the present invention to provide an improved electric toothbrush head having a substantially spherical brush of small enough size that efficient cleaning of teeth is enabled.

It is a further object of the present invention to provide an improved electric toothbrush head having a substantially hemispherical brush.

A substantially spherical brush having a drive means is at an inherent disadvantage when compared with conventional brushes. Conventional toothbrushes typically comprise a bristle pack formed from plural "bristle bundles" which are staked to a support at a fixed end. The bristles project in broadly the same orientation from the support to provide a generally planar brushing face at their free ends.

A spherical brush, or hemispherical brush (at its base diameter), has a central spherical support with bristles projecting in opposite directions therefrom. This has the result that, for a given length of bristle, the overall dimension of a spherical brush will be double that required for a single sided arrangement. Furthermore, because the bristles must be a minimum length to provide sufficient compliance for a given diameter of bristle, which is in turn set by wear requirements, a spherical arrangement sets a minimum size for a hemispherical or spherical brush of at least twice this minimum bristle length, plus the intervening support.

It is therefore necessary to minimise the size of the support. However, at the same time, the support must provide strong retention for the bristles of the toothbrush. Furthermore, where the support is provided with a drive receiver such as a gear, this must be strong enough transmit receive sufficient power from a drive mechanism of the toothbrush to the tufted sphere or tufted hemisphere, so that it rotates, even when loaded with toothpaste.

A further issue is that, because the bristles project in a generally radial direction from the surface of the sphere, the separation between bristles at their free ends becomes more pronounced with a small dome than a large dome, for a fixed length of bristle. Hence applicant has identified it is important to maximise the 'packing' of the bristles at the support surface to ensure sufficient density of bristles at the brushing surface of the brush for efficient cleaning, and to provide a visually acceptable appearance.

To this end, applicant has identified that, by fusing the bristle bundles (also known as tufts) at their base to provide a monolithic support structure, i.e. a support structure which is formed from the same material as, and integral with, the material of the bristles, the need for a separate support is reduced, and preferably eliminated. Without a separate support, and the associated staking required to lock the bristle packs into the support, a bristled dome of reduced dimension can be manufactured which still retains good retention strength of the bristles. In a further refinement, the monolithic structure is bonded to a supporting ring which provides the drive receiver for the bristled dome. Preferably, this supporting ring is made from the same material as the bristles and is fused to the dome by heating the plastic so that the entire support ring, dome, and bristles unite to form a monolithic structure. Furthermore, by optimising the geometry of the bristle bundles to improve packing density at their proximal ends, the amount of bristle fusion required to form the supporting dome is minimised.

### Summary of the Invention

According to the present invention, there is provided a toothbrush head for an electric toothbrush comprising a brush which comprises a bristled dome joined to an annular carrier, wherein the bristled dome comprises a supporting dome having a convex outer surface, and bristles which extend outwards from the convex outer surface, and wherein the bristled dome is a monolithic structure consisting of fused bristles.

Preferably, the bristles are of substantially equal length, and the bristled dome is shaped such that the brush is substantially hemispherical.

Preferably, the substantially hemispherical brush has a hemispherical radius of no more than 10mm. More preferably the hemispherical radius is no more than 9mm.

The toothbrush head may further comprise a second brush comprising a bristled dome joined to an annular carrier, wherein each brush comprises a supporting dome having a convex outer surface, and bristles which extend outwards from the convex outer surface, and wherein each bristled dome is a monolithic structure formed by heat fusion of the bristles, wherein the first brush and second brush are joined about their annular carriers to provide a pair of opposed, outward facing bristled domes.

Preferably the first brush annular carrier is bonded to the second brush annular carrier. The first annular carrier may be bonded to the second annular carrier by use of adhesive or, more preferably by heat fusion.

Most preferably, the first annular carrier is fused to the second annular carrier by laser welding. Preferably the first annular carrier is doped with a material e.g. carbon black which absorbs laser energy at a predetermined laser frequency, so that it is opaque to a predetermined laser light, while the second carrier is not doped and remains substantially transparent to said predetermined laser frequency thereby ensuring good control of melting at the interface of the first annular carrier and second annular carrier.

Preferably, the first brush and second brush are substantially hemispherical and the pair of opposed outward facing bristled domes provide a substantially spherical brush assembly.

Preferably, the substantially spherical brush assembly has a spherical diameter of no more than 20mm. More preferably, the spherical diameter is no more than 18mm.

Preferably the pair of substantially hemispherical brushes each provide a tufted spherical cone of between 135° and 145°, preferably about 140°, to provide a clearance between them for receipt of drive to the bonded annular carriers while providing a useful cleaning area at the distal ends of the bristles.

Preferably at least one bristled dome is bonded with its annular carrier and, where more than one bristled dome is used, all the bristled domes are bonded to their annular carriers.

Preferably, the dome is bonded with the annular carrier using adhesive and/or welding, and/or use of a mechanical / melt interface such as a snap fit arrangement which is then heated to fuse the bristled dome with the annular carrier, and/or by fusing of the bristled dome to the annular carrier.

Most preferably, the bonding is achieved by heat fusion of the at least one bristled dome with its annular carrier, such that the bristled dome and annular carrier are fused.

Preferably, the annular carrier of at least one brush provides a bearing surface and, where two annular carriers are used, each carrier provides at least one bearing surface.

Preferably, the annular carrier of at least one brush provides a drive receiver. Preferably the drive receiver provides at least part of a drive ring for receiving drive from an external driver, including a gear ring or pulley ring. More preferably the drive ring is a gear ring for receiving drive from a gear drive.

Where two annular carriers are used, each annular carrier can be adapted to provide a first and second quadrant of the drive ring, which first and second quadrants are angularly equi-spaced about the annular carrier so that the joined annular carriers form a complete drive ring.

More preferably the first brush comprises a first annular carrier provided with a gear ring, and the second brush comprises a second annular carrier which can be bonded to the gear ring of the first gear ring.

Preferably, the at least one bristled dome and annular carrier are made from compatible heat fusible materials.

Preferably, the at least one bristled dome is made of nylon or PBT (Polybutylene terephthalate), and the annular carrier is made from a compatible material.

Preferably, where at least one bristled dome is made from Nylon, the corresponding annular carrier is made from Nylon or PC.

More preferably, the at least one bristled dome is made from PBT, and the corresponding annular carrier is made from PBT, or ABS (Acrylonitrile butadiene styrene), or PC (Polycarbonate) or PEI (Polyetherimide).

Most preferably, the at least one brush comprises a bristled dome and annular carrier made from PBT.

More preferably, the at least one bristled dome is made from PBT, and the corresponding annular carrier is made from PBT, or ABS (Acrylonitrile butadiene styrene), or PC (Polycarbonate) or PEI (Polyetherimide).

Most preferably, the at least one brush comprises a bristled dome and annular carrier made from PBT.

Preferably, at least one annular carrier is provided with an annular surface adapted to provide a keying feature for bonding with the bristled dome.

Preferably, this keying feature comprises a non-planar surface; in particular a re-entrant surface; in particular a castellated surface comprising an annular array of upstanding fingers which may be curved.

Optionally, keying features are provided to at least one annular carrier which comprise an etched material, or plurality of anchors around which molten bristle material can flow and, upon solidification, lock to provide a mechanical bond between the bristle material and the anchors of the annular carrier.

The bristled dome comprises a plurality of bristle bundles each having a distal end and proximal end, wherein the bristles of the bristle bundles are fused together adjacent their proximal ends, by the application of heat, to form the supporting dome, while the distal end of each bristle is free to form a cleaning surface.

All the supporting dome of at least one brush is provided by fused bristle material.

Preferably, the bristle bundles have a polygonal cross section at their proximal ends to enable close packing prior to fusing.

More preferably, the bristle bundles are formed to have a polygonal cross section at their proximal ends such that they form a loose packed hemispherical polyhedra which is fused to form the supporting dome.

Preferably the at least one brush comprises at least a first frustoconical array of bristle bundles and second frustoconical array of bristle bundles, concentric with the annular carrier, wherein the bristle bundles of the first annular array have a first polygonal cross section and the second annular array of bristle bundles has a second polygonal cross section, and wherein the first and second polygonal cross sections are different.

Preferably the bristle bundles are arranged in four frustoconic arrays, concentric with the annular carrier, and the bundles of each array are provided with a polygonal cross-section which is different to the bundles of the other arrays.

Preferably, the bristle bundles are arranged as four frustoconical arrays, each concentric with the annular carrier and comprising a first outermost array, adjacent the annular carrier, a second intermediate array, spaced further from the annular carrier, but interdigitate with the first array, a third array spaced further again from the annular carrier so that the bundles lie above those of the first array but interdigitate with the bundles of the second array, and a fourth array located about the apex of the dome.

More preferably the first, second and third arrays each comprises seven bristle bundles, while the fourth array comprises three bristle bundles, all of which are equiangularly spaced about the axis of the annular carrier in their respective arrays.

Preferably the bristles bundles of the first array have a first irregular hexagonal cross-section. This preferably comprises a substantially square lower half adjacent the annular ring, and a contiguous substantially trapezoid upper half.

Preferably the bristle bundles of the second array have a second irregular pentagonal cross-section. This preferably comprises a substantially trapezoid lower half, and a contiguous substantially triangular upper half.

Preferably the bristle bundles of the third array have a third irregular hexagonal form.

Preferably the bristle bundles of the fourth array have a fourth triangular cross section. This triangular cross-section preferably comprises an isosceles triangle having a curved based.

Preferably, the bristles of the bristled domes are between 4mm and 7mm, preferably between 5mm and 7mm, most preferably between 5.5mm and 6.5mm, still more preferably about 6mm.

### Description of Drawings / Figures

FIGURE 1 shows an isometric view on an electric toothbrush incorporating a brush according to the present invention, and a spherical brush assembly according to a second aspect of the present invention.
FIGURE 2 shows an isometric view on the toothbrush head of the electric toothbrush of FIGURE 1.
FIGURE 3 shows a driven spherical brush assembly from the toothbrush of FIGURE 2.
FIGURE 4 shows an exploded view on part of the driven brush assembly of FIGURE 3.
FIGURE 5 shows a cross section through an annular carrier assembly of the driven brush assembly of FIGURE 3.
FIGURE 6A shows a bristled dome according to the present invention.
FIGURE 6B shows a cross section of a first array of bristle bundles of the bristled dome of FIGURE 6A.
FIGURE 6C shows a cross section of a second array of bristle bundles of the bristled dome of FIGURE 6A.
FIGURE 6D shows a cross section of a third array of bristle bundles of the bristled dome of FIGURE 6A.
FIGURE 6E shows a cross section of a fourth array of bristle bundles of the bristled dome of FIGURE 6A.
FIGURE 6F shows schematically an illustration of part of a loose packed hemispherical polyhedra formed by the bristle bundles of the first, second, third and fourth array.
FIGURE 7 shows an isometric view on a second toothbrush head incorporating a brush according to the present invention.
FIGURE 8 shows an exploded view on the brush and part of the internal mechanism of the brush shown in FIGURE 7.

### Note

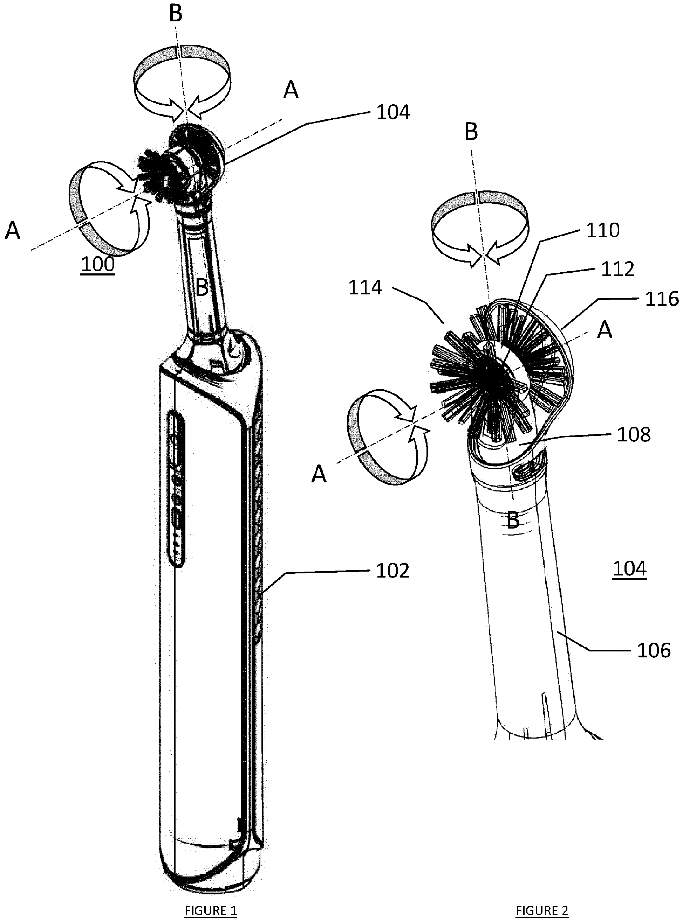

FIGURES 1 through 6E, FIGURE 7 & FIGURE 8 are based upon engineering drawings used for development of the toothbrush heads according to the present invention. Hence the toothbrush head and componentry are shown to scale and is representative of the geometry of a toothbrush according to the present invention.

### Detailed Description of the Invention

Turning now to FIGURE 1 there is shown an electric toothbrush 100 which comprises a handle 102 and a replaceable toothbrush head 104. The handle comprises a drive system (not shown) capable of providing a first rotational drive to the head 104 to cause rotation of a brush about a first axis A-A in a clockwise and anti-clockwise direction, and a second rotational drive to the head 104 to cause rotation of the brush about a second axis B-B in a clockwise and anti-clockwise direction.

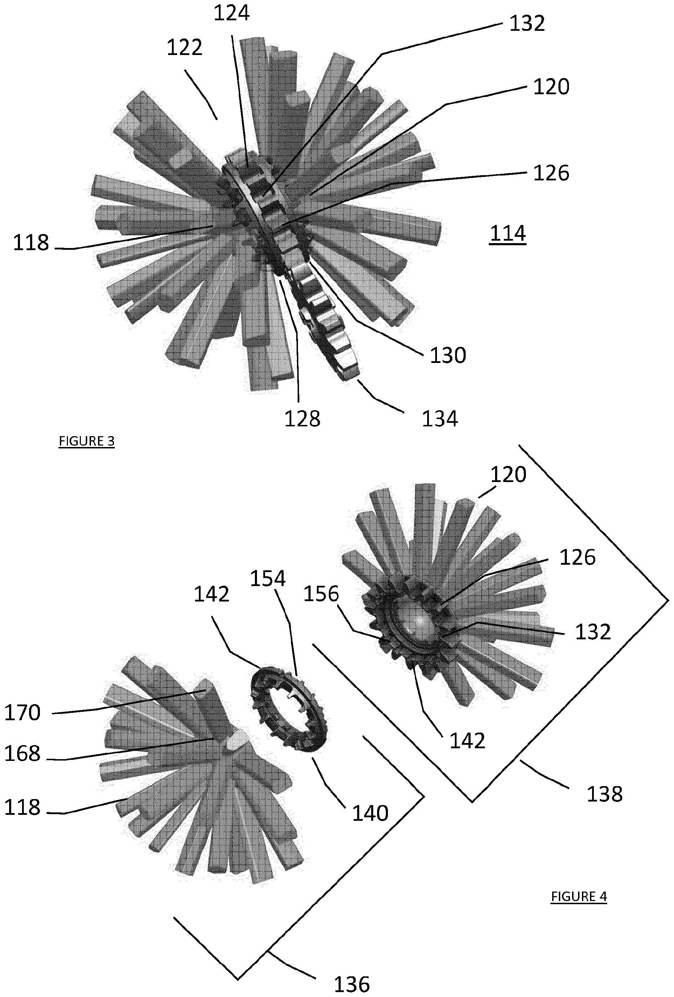

With reference to FIGURE 2, the head 104 comprises a first fixed housing 106 which is fixed relative to the handle, and a second inner housing 108, with a bearing 110 at its free end 112 which holds a substantially spherical brush assembly 114. The second housing 108 is rotatable relative to the outer housing about axis B-B to provide rotation of the brush assembly 114 about axis B-B. Rotation of the brush assembly 114 about axis A-A is obtained by provision of rotational drive within the second housing 108 to a drive receiver (shown in FIGURE 3 below) of the brush assembly 114 which rotates the brush assembly 114 within bearing 110 about axis A-A. The drive receiver also forms part of the bearing 110 to align the brush assembly 114 correctly with the inner housing 108 and to transmit rotational loads, particularly when rotated about axis B-B.

The first static housing 106 is provided with a protective cover, or 'spoon', 116 which shields a portion of the spherical brush assembly 114 from contact with soft tissue, e.g. the cheeks, when brushing teeth with the remaining exposed portion of the brush assembly 114.

With reference to FIGURE 3, the spherical brush assembly 114 is shown removed from the toothbrush head 104 of FIGURE 1 and FIGURE 2.

The spherical brush assembly 114 comprises a first bristled dome 118 joined to a second bristled dome 120 by a central drive receiver 122 comprising a ring gear 124 having an annular array of gear teeth 126. These are partially recessed between a first annular flange 128 and second annular flange 130 so that each gear root 132 lies within the outer diameter of the flanges 128, 130.

Rotational drive about axis A-A is provided by the interaction of a drive gear 134 of the drive system which is driven about its axis to cause the ring gear 124 of the brush assembly 114 to drive in the opposite direction. The flanges 128, 130 and the location of the ring gear 124 between them so that the gear root 132 lies beneath their outer diameter, ensures that the drive gear 134 is well aligned with the ring gear, ensuring good drive, and minimising wear.

Referring now to FIGURE 4, the brush assembly 114 of FIGURE 3 is shown in partially exploded view. The brush assembly 114 comprises a first brush 136 and second brush 138.

The first brush 136 comprises first bristled dome 118 bonded to a first annular carrier 140, although these components are shown apart for clarity of certain features. The second brush 138 comprises second bristled dome 120 bonded to a second annular carrier 142.

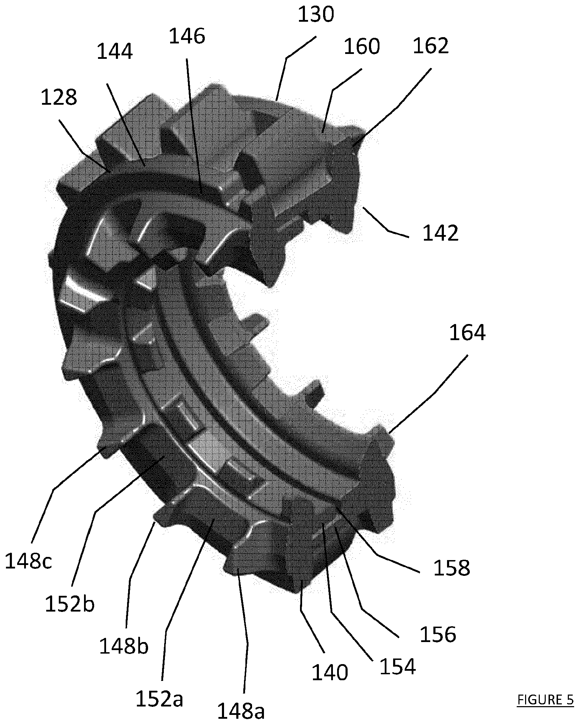

With reference also to FIGURE 5, which shows a cross-section through an assembly of the first annular carrier 140 and second annular carrier 142, the first annular carrier 140 comprises the first annular flange 128, which provides a bearing shoulder comprising the curved outer edge 144 and its outboard planar annular surface 146. Inboard of the annular flange 128, the annular carrier 140 is provided with an annular array of upstanding curved fingers 148a, 148b, 148c which define a castellated ring 150 around the outboard face of the first annular carrier 128. A series of alternating reliefs 152a, 152b are formed between the fingers 148a, 148b, 148c which have alternating depth so that a like number of deep slots 152a and shallow slots 152b are provided by the castellated ring 150.

On the opposite side of the first annular flange 128, the first annular carrier 140 comprises a splined inner sleeve 154 having an outboard array of axial splines. The splined inner sleeve 154 is received by a splined outer sleeve 156 extending from the second annular carrier 142. The splined inner sleeve 154 abuts an inner shoulder of the splined outer sleeve 156 to provide an abutment joint 158 between the two annular carriers 140,142 suitable for bonding with adhesive, or by heat fusion. The splines of the inner sleeve 154 and inner sleeve 156 cooperate to ensure good alignment of the first annular carrier 140 and second annular carrier 142 upon assembly.

The gear teeth 126 of ring gear 124 are provided to the external curved surface of the splined outer sleeve 156.

The second annular carrier 142, like the first annular carrier 140, provides a bearing shoulder provided by the second annular flange 130. This bearing shoulder provides a curved outer edge 160 and outboard planar annular bearing surface 162.

The bearing surfaces 144, 146, 160, 162 of the spherical brush assembly cooperate with the bearing 110 of the inner housing to locate the brush assembly 114 within the inner housing 108. They provide bearing support on both sides of the ring gear 124 of the brush assembly 114 to allow rotational movement about the axis A-A by the brush assembly 114 under drive from the drive gear 134, whilst ensuring good alignment of the ring gear 124 and drive gear 134. The outer bearing surfaces 146, 162 locate the brush assembly 114 axially within the inner housing 108 to again ensure good alignment of the gears and are also important in the transmission of rotational force from the inner housing 108 to the assembly 110 when it is being rotated about the B-B axis.

The second annular carrier 142, like the first annular carrier 128, is provided with a castellated ring 164 around the outboard face of the second annular carrier 130. Again, a series of alternating reliefs are formed between the fingers which have alternating depth so that a like number of deep slots and shallow slots are provided by the ring 164.

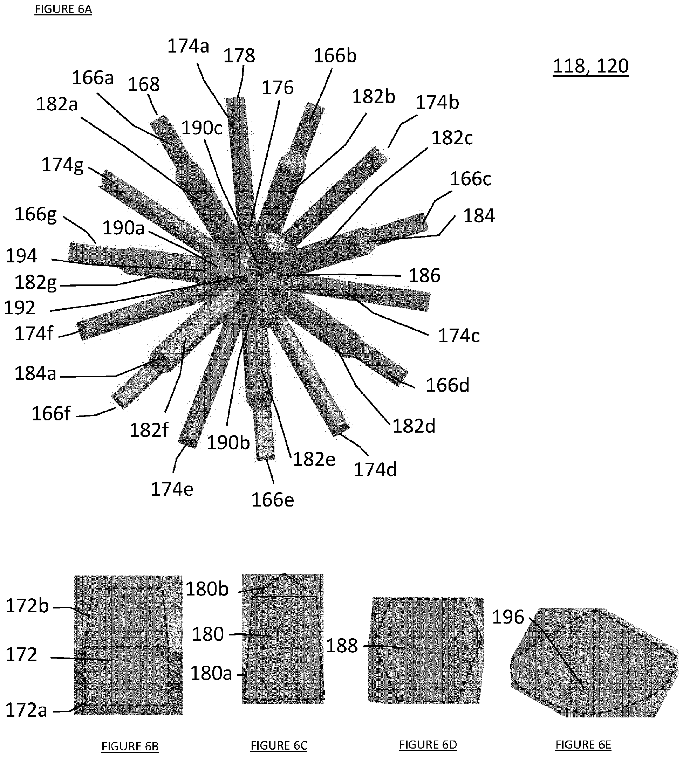

With reference also to FIGURE 6A, which shows a view on the apex of a bristled dome 118, 120, and FIGURES 6B through FIGURE 6E, the bristled dome 118, 120 of each brush 136, 138 is formed by fusing plural arrays of bristle bundles to teach other and to the annular carrier 140,142.

In more detail, a first array of seven bristle bundles 166a, *(et seq.)* is aligned co-axial with the axis of the annular carrier 140, 142. The array equi-angularly distributed about the axis of the annular carrier 140, 142, and is substantially frustoconical, i.e. approximating a truncated cone. The array points towards the axis of the carrier 140, 142, (i.e. axis A-A) at an angle of about 70° to the axis, so that each bristle bundle projects upwards from the plane of the carrier 140, 142 at about 20°.

Each bristle bundle 166a (*et seq.)* extends from a proximal end 168, which is received in a deep slot 152a of a castellated ring 150, 164, to a distal end 170 which forms the cleaning surface of the brush 136,138.

The bundles 166a (*et seq.*) have a hexagonal cross-section 172 as shown in FIGURE 6B. The hexagonal cross-section comprises a lower rectangle 168a and a contiguous upper trapezium 168b which tapers inwards away from the contiguous join with the lower rectangle.

A second frustoconical array of seven bristle bundles 174a, (*et seq.)* is aligned co-axial with the axis of the annular carrier 140, 142. Each bristle bundle points towards the axis of the carrier 140,142 at an angle of about 60°, so that each bristle bundle projects upwards from the plane of the carrier 140, 142, at an angle of about 30°.

Each bristle bundle of the second array 174a, *(et seq.)* extends from a proximal end 176, which is received in the shallow reliefs 152b of a castellated ring 150, 164, to a distal end 178 which forms the cleaning surface of the brush 136,138. The bundles 174a, (*et seq.)* have a pentagonal cross-section 180 comprising a lower trapezoid 180a, and a contiguous isosceles triangle 180b.

The proximal ends 176 of the second array lie interdigitate the proximal ends 176 of the first array but raised higher from the plane of the carrier 140, 142, than the first array such that the lower trapezoid part of the second bristles 174a, *(et seq.)* lies wholly between the first bundles, but the triangular part 180b of the cross section 180 of the second bristle bundles 174a, (*et seq*.) are displaced above the first array of bristle bundles 166a, (*et seq*.)*.*

A third frustoconical array of seven equi-angularly spaced bristle bundles 182a, (*et seq.*) has an angle to the carrier axis of about 30° so that each bristle bundle projects upwards from the plane of the carrier at about 60°. Each bristle bundle 182a extends from a proximal end 184 located adjacent the proximal ends of the first and second arrays 166a, (*et seq*.), 174, (*et seq*.) to a distal end 186 which forms the cleaning surface of the brush 114.

The bristle bundles 182a, (*et seq*.) of the third array have a hexagonal cross section 188 comprising a lower half shaped such that fits and loosely conforms between the upper surface of the first bristle bundle cross section 172, and between the triangular part 180b of the second bristle bundle cross-section.

The final, fourth frustoconical array of bristle bundles 190a, 190b, 190c comprises three bristle bundles 190a, 190b, 190c equi-angularly spaced about the axis of the carrier 140,142. Each bundle is oriented at an angle of about 15° to the carrier axis, i.e. about 75° to the plane of the carrier 140, 142. Each bundle 190a, (*et seq.*) extends from a proximal end 192 located adjacent the proximal ends of the third array 182a, (*et seq.*), to a distal end 194 which forms the cleaning surface of the bristled dome 118,120.

The bristle bundles 190a, (*et seq*.) of the fourth array have a lobed cross-section 192 resembling an isosceles triangle with a curved base. The bundles are arranged so that their flat surfaces abut, so that the curved base forms a circular line which abuts the upper surface of the fourth bristle bundles at their proximal ends.

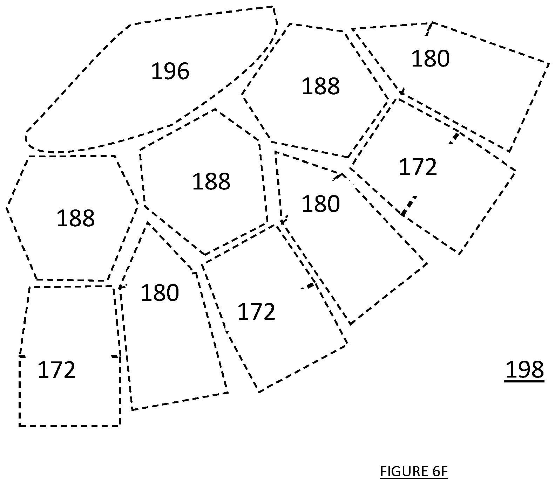

Referring now to FIGURE 6F, it is shown schematically that the cross-sections 172, 180, 177, 196 presented by the first, second, third, and fourth array of bristle bundles at their proximal ends 168, 176, 184, 192 enable close packing of the bristle proximal ends to, with minimum gaps therebetween, to provide a loose packed hemispherical polyhedra 198. FIGURE 6F shows a little less than half of the full hemispherical polyhedra 198 due to the limitations of presenting a three-dimensional surface as a two-dimensional drawing.

Fusion of this hemispherical polyhedra via fusion melting of the bristle bundles at their proximal ends to each other, provides a bristled dome 118, 120 according to the present invention. Fusion of the bristle bundles at their proximal ends removes the need to stake the bristle bundles in a separately formed component, enabling reduced dimensions but whilst providing sufficient retention of the bristles, via the monolithic structure.

Preferably, the bristled dome formed and fused to the annular carrier, which is made of a compatible material, at the same time. In this way, the bristled dome is strongly joined to the carrier, for the reasons set forth above. A further advantage is that the dome can be formed by fusion melting while features of the brush (136, 138) which require particular dimensional control, such as the bearing surfaces, and optional drive features, are provided via the annular carriers which can be manufactured via an injection moulding before joining. The injection moulding process has better dimensional control the melting process used to form the supporting dome, and this facilitates very good control of the bearing tolerances.

In manufacture, the bristle bundles are inserted into a mould comprising a substantially hemispherical cavity (not shown), such that they project a predetermined distance into the cavity. A heated hemispherical press, with similar geometry to the hemispherical cavity, but shaped to leave a gap between the press and cavity of approximately 1mm to form the dome support, is then inserted into the cavity so that it contacts all of the bristle bundles at their proximal ends. The tool is heated to a temperature which causes the material of the bristles to fuse together, creating a monolithic bristled dome.

The gap between the press and cavity gives a wall thickness of about 1mm which is believed to give good retention strength of the bristle bundles, while allowing a suitably small support to be formed, however, it may be possible to attain the same properties with wall thickness ranging from 0.5mm to 2mm.

In a preferred step, the hemispherical cavity is provided with a recess to receive an annular carrier 140, 142 which is inserted into the recess such that the first and second bristle arrays 166a, (*et seq*.)*,* and 174a, (*et seq*.) abut, respectively the reliefs 152a, 152b, provided by the castellated ring 150, 164 of the annular carriers. The curved fingers 148a, 148b enclose the bristle arrays on either side, providing a mechanical lock to stabilise them in place.

A similar heated hemispherical press is then introduced into the cavity, arranged to contact the proximal ends of all the bristle bundles and also the inside of the castellated ring 150, 164 of the annular carriers. The press is heated such that the proximal ends fuse to form the supporting dome of the bristled dome (118, 120), thereby forming the bristled dome, while at the same time, or near same time, fusing with the castellated rings of the support, creating a monolithic bristled dome and annular carrier.

In the present embodiment, the bristles and carriers are all manufactured from PBT (Polybutylene terephthalate) ensuring good fusion of the components. Other materials could be used for the bristled dome, including nylon.

If the carrier is to be fused to the bristled dome, the same or compatible materials should be used, for example, for a PBT bristled dome, the carrier could be made from ABS (Acrylonitrile butadiene styrene), or PC (Polycarbonate) or PEI (Polyetherimide). For a nylon bristled dome, the carrier could be made from nylon or PC.

In an alternative manufacturing process, the bristled dome could be bonded to the carrier after fusion of the bristle ends, either by a further melting step, to fuse the carrier to the bristled dome, or by use of an adhesive to glue the bristled dome and carrier together.

After a bristled dome 118 has been formed and joined with the first annular carrier 140 to provide the first brush 136, and a bristled dome has been formed and joined with the second annular carrier 142 to provide the second brush 138, the bristled domes 118, 120 are bonded together by the use of a suitable adhesive at the abutment joint 158 of their annular carriers 140, 142, thereby providing the substantially spherical brush assembly 114.

In an alternative process, one of the annular carriers 140, 142 can be doped with a suitable material such as carbon black. Upon assembly of the bristled domes 118, 120, a laser is focussed on to the abutment joint 158 through the undoped carrier so that the laser energy is absorbed by the doped carrier. This causes localised heating and, in turn, fusion of the two carriers 140, 142 at the abutment joint 158.

Ideally, all the bristles of the bristle bundles are the same length after manufacture. In the present embodiment, all the bristles are about 6mm long. Preferably the dome of the bristled dome has a radius of no more than 8mm, and more preferably 6mm to ensure that the substantially hemispherical brush is no more than 20mm across its widest dimension, and more preferably no more than 18mm across its base dimension (across the first annular array of bristles).

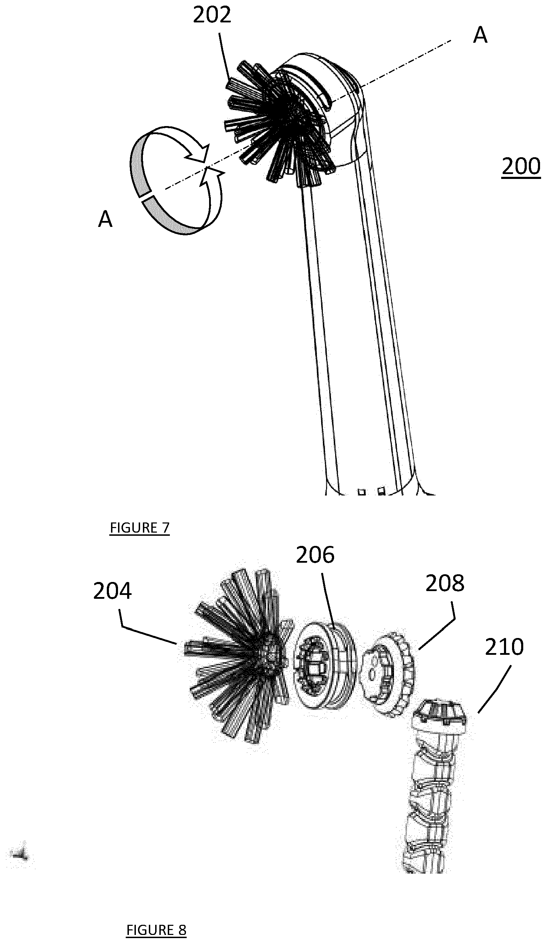

With reference to FIGURE 7, there is shown an isometric view on a second toothbrush head 200 incorporating a brush 202 according to the present invention.

The second toothbrush is compatible with the toothbrush handle shown in FIGURE 1, but is configured to only rotate about the axis of the brush 202, i.e. around axis A-A.

With reference also to FIGURE 8, the brush 202 comprises a single brush 204 which comprises a bristled dome 206. The annular carrier 208 is adapted to provide an annular bearing channel, and to receive a splined drive gear 208. This drive gear is bevelled, to convert drive received from a drive shaft 210 through 90° to rotate the brush about axis A-A.

## Claims

1. A toothbrush head (104) for an electric toothbrush (100) comprising a brush (136, 138) which comprises a bristled dome (118, 120) joined to an annular carrier (140, 142),
wherein the bristled dome (118, 120) comprises a supporting dome having a convex outer surface, and bristles which extend outwards from the convex outer surface,
**characterised in that** the bristled dome (118, 120) is a monolithic structure comprising a plurality of bristle bundles (166, 174, 182, 190) each having a distal end (170, 178, 186, 194) and proximal end (168, 176, 184, 192), wherein the bristles of the bristle bundles are fused together adjacent their proximal ends, by the application of heat, to form the supporting dome.

2. A toothbrush head (104) as claimed in claim 1 wherein the bristled dome (118, 120) is shaped such that the brush (136, 138) is substantially hemispherical.

3. A toothbrush head (104) as claimed in claim 1 further comprising a second brush (136, 138) comprising a bristled dome (118, 120) joined to an annular carrier (140, 142),
wherein each brush (136, 138) comprises a supporting dome having a convex outer surface, and bristles which extend outwards from the convex outer surface,
and wherein each bristled dome (118, 120) is a monolithic structure formed by fused bristles wherein the first brush (136, 138) and second brush (136, 138) are joined about their annular carriers (140, 142) to provide a pair of opposed outward facing bristled domes (118, 120).

4. A toothbrush head (104) as claimed in claim 3 wherein the first brush (136, 138) and second brush (136, 138) are substantially hemispherical and the pair of opposed outward facing bristled domes (118, 120) provide a substantially spherical brush assembly (114).

5. A toothbrush head (104) as claimed in any preceding claim wherein at least one bristled dome (118, 120) is bonded with its annular carrier (140, 142).

6. A toothbrush head (104) as claimed in any preceding claim wherein at least one bristled dome (118, 120) and annular carrier (140, 142) are fused.

7. A toothbrush head (104) as claimed in any preceding claim, wherein the annular carrier (140, 142) of at least one brush provides a bearing surface (144, 146, 160, 162).

8. A toothbrush head (104) as claimed in any preceding claim wherein the annular carrier (140, 142) of at least one brush provides a drive receiver (122).

9. A toothbrush head (104) as claimed in any preceding claim wherein the bristled dome (118, 120) and annular carrier (140, 142) of at least one brush are formed from PBT.

10. A toothbrush head (104) as claimed in any preceding claim wherein at least one brush (136, 138) comprises at least a first frustoconical array of bristle bundles (166) and second frustoconical array of bristle bundles (174) , concentric with the annular carrier (140, 142), wherein the bristle bundles of the first annular array (166) have a first polygonal cross section (172) and the second annular array of bristle bundles (174) has a second polygonal cross section (180), and wherein the first and second polygonal cross sections are different.

11. A toothbrush head (104) as claimed in claim 10 wherein the bristle bundles (166, 174, 182, 190) are arranged in four frustoconic arrays, concentric with the annular carrier (140, 142), and the bundles of each concentric array are provided with a polygonal cross-section (172, 180, 188, 192) which is different to the bundles of the other arrays.

12. A toothbrush head (104) as claimed in claim 10 or claim 11 wherein the polygonal cross sections (172, 180, 188, 192) of the bristle bundles (166, 174, 182, 190) at their proximal ends (168, 176, 184, 192) enables the formation of a loose packed hemispherical polyhedral (198).

13. An electric toothbrush (100) comprising a toothbrush head (104) as claimed in any of claims 1 through 12.

## Patentansprüche

1. Zahnbürstenkopf (104) für eine elektrische Zahnbürste (100), umfassend eine Bürste (136, 138), die eine Borstenkuppel (118, 120) umfasst, die mit einem ringförmigen Träger (140, 142) verbunden ist, wobei die Borstenkuppel (118, 120) eine Stützkuppel mit einer konvexen Außenfläche umfasst, und Borsten, die sich von der konvexen Außenfläche nach außen erstrecken, **dadurch gekennzeichnet, dass** die Borstenkuppel (118, 120) eine monolithische Struktur ist, die eine Vielzahl von Borstenbündeln (166, 174, 182, 190) umfasst, die jeweils ein distales Ende (170, 178, 186, 194) und ein proximales Ende (168, 176, 184, 192) aufweisen, wobei die Borsten der Borstenbündel benachbart zu ihren proximalen Enden durch die Anwendung von Wärme miteinander verschmolzen sind, um die Stützkuppel zu bilden.

2. Zahnbürstenkopf (104) nach Anspruch 1, wobei die Borstenkuppel (118, 120) so geformt ist, dass die Bürste (136, 138) im Wesentlichen halbkugelförmig ist.

3. Zahnbürstenkopf (104) nach Anspruch 1, der ferner eine zweite Bürste (136, 138) umfasst, die eine Borstenkuppel (118, 120) umfasst, die mit einem ringförmigen Träger (140, 142) verbunden ist, wobei jede Bürste (136, 138) eine Stützkuppel mit einer konvexen Außenfläche und Borsten umfasst, die sich von der konvexen Außenfläche nach außen erstrecken, und wobei jede Borstenkuppel (118, 120) eine monolithische Struktur ist, die durch verschmolzene Borsten gebildet wird, wobei die erste Bürste (136, 138) und die zweite Bürste (136, 138) um ihre ringförmigen Träger (140, 142) herum verbunden sind, um ein Paar gegenüberliegender, nach außen gerichteter Borstenkuppeln (118, 120) vorzusehen.

4. Zahnbürstenkopf (104) nach Anspruch 3, wobei die erste Bürste (136, 138) und die zweite Bürste (136, 138) im Wesentlichen halbkugelförmig sind und das Paar gegenüberliegender, nach außen gerichteter Borstenkuppeln (118, 120) eine im Wesentlichen kugelförmige Bürstenanordnung (114) vorsieht.

5. Zahnbürstenkopf (104) nach einem der vorhergehenden Ansprüche, bei dem mindestens eine Borstenkuppel (118, 120) mit ihrem ringförmigen Träger (140, 142) verbunden ist.

6. Zahnbürstenkopf (104) nach einem der vorhergehenden Ansprüche, wobei mindestens eine Borstenkuppel (118, 120) und ein ringförmiger Träger (140, 142) miteinander verschmolzen sind.

7. Zahnbürstenkopf (104) nach einem der vorhergehenden Ansprüche, wobei der ringförmige Träger (140, 142) mindestens einer Bürste eine Auflagefläche (144, 146, 160, 162) vorsieht.

8. Zahnbürstenkopf (104) nach einem der vorhergehenden Ansprüche, wobei der ringförmige Träger (140, 142) mindestens einer Bürste eine Antriebseinrichtung (122) vorsieht.

9. Zahnbürstenkopf (104) nach einem der vorhergehenden Ansprüche, wobei die Borstenkuppel (118, 120) und der ringförmige Träger (140, 142) mindestens einer Bürste aus PBT bestehen.

10. Zahnbürstenkopf (104) nach einem der vorhergehenden Ansprüche, wobei mindestens eine Bürste (136, 138) mindestens eine erste kegelstumpfförmige Anordnung von Borstenbündeln (166) und eine zweite kegelstumpfförmige Anordnung von Borstenbündeln (174) umfasst, die konzentrisch zu dem ringförmigen Träger (140, 142) angeordnet sind, wobei die Borstenbündel der ersten ringförmigen Anordnung (166) einen ersten polygonalen Querschnitt (172) aufweisen und die zweite ringförmige Anordnung von Borstenbündeln (174) einen zweiten polygonalen Querschnitt (180) aufweist und wobei der erste und der zweite polygonale Querschnitt unterschiedlich sind.

11. Zahnbürstenkopf (104) nach Anspruch 10, wobei die Borstenbündel (166, 174, 182, 190) in vier kegelstumpfförmigen Anordnungen konzentrisch zu dem ringförmigen Träger (140, 142) angeordnet sind, und die Bündel jeder konzentrischen Anordnung mit einem polygonalen Querschnitt (172, 180, 188, 192) vorgesehen sind, der sich von den Bündeln der anderen Anordnungen unterscheidet.

12. Zahnbürstenkopf (104) nach Anspruch 10 oder 11, wobei die polygonalen Querschnitte (172, 180, 188, 192) der Borstenbündel (166, 174, 182, 190) an ihren proximalen Enden (168, 176, 184, 192) die Bildung eines locker gepackten halbkugelförmigen Polyeders (198) ermöglichen.

13. Elektrische Zahnbürste (100), umfassend einen Zahnbürstenkopf (104) nach einem der Ansprüche 1 bis 12 beansprucht.

## Revendications

1. Tête de brosse à dents (104) pour une brosse à dents électrique (100) comprenant une brosse (136, 138) qui comprend un dôme à poils (118, 120) joint à un support annulaire (140, 142),
dans laquelle le dôme à poils (118, 120) comprend un dôme de support ayant une surface extérieure convexe et des poils qui s'étendent vers l'extérieur à partir de la surface extérieure convexe,
**caractérisée en ce que** le dôme à poils (118, 120) est une structure monolithique comprenant une pluralité de faisceaux de poils (166, 174, 182, 190) ayant chacun une extrémité distale (170, 178, 186, 194) et une extrémité proximale (168, 176, 184, 192), dans laquelle les poils des faisceaux de poils sont fusionnés ensemble en position adjacente à leurs extrémités proximales, par l'application de chaleur, pour former le dôme de support.

2. Tête de brosse à dents (104) selon la revendication 1, dans laquelle le dôme à poils (118, 120) est formé de telle sorte que la brosse (136, 138) est sensiblement hémisphérique.

3. Tête de brosse à dents (104) selon la revendication 1, comprenant en outre une seconde brosse (136, 138) comprenant un dôme à poils (118, 120) joint à un support annulaire (140, 142),
dans laquelle chaque brosse (136, 138) comprend un dôme de support ayant une surface extérieure convexe et des poils qui s'étendent vers l'extérieur à partir de la surface extérieure convexe,
et dans laquelle chaque dôme à poils (118, 120) est une structure monolithique formée par des poils fusionnés, dans laquelle la première brosse (136, 138) et la seconde brosse (136, 138) sont jointes autour de leurs supports annulaires (140, 142) pour former une paire de dômes à poils tournés vers l'extérieur opposés (118, 120).

4. Tête de brosse à dents (104) selon la revendication 3, dans laquelle la première brosse (136, 138) et la seconde brosse (136, 138) sont sensiblement hémisphériques et la paire de dômes à poils tournés vers l'extérieur opposés (118, 120) forme un ensemble de brosses sensiblement sphérique (114).

5. Tête de brosse à dents (104) selon l'une quelconque des revendications précédentes, dans laquelle au moins un dôme à poils (118, 120) est lié à son support annulaire (140, 142).

6. Tête de brosse à dents (104) selon l'une quelconque des revendications précédentes, dans laquelle au moins un dôme à poils (118, 120) et un support annulaire (140, 142) sont fusionnés.

7. Tête de brosse à dents (104) selon l'une quelconque des revendications précédentes, dans laquelle le support annulaire (140, 142) d'au moins une brosse forme une surface d'appui (144, 146, 160, 162).

8. Tête de brosse à dents (104) selon l'une quelconque des revendications précédentes, dans laquelle le support annulaire (140, 142) d'au moins une brosse forme un récepteur d'entraînement (122).

9. Tête de brosse à dents (104) selon l'une quelconque des revendications précédentes, dans laquelle le dôme à poils (118, 120) et le support annulaire (140, 142) d'au moins une brosse sont formés à partir de PBT.

10. Tête de brosse à dents (104) selon l'une quelconque des revendications précédentes, dans laquelle au moins une brosse (136, 138) comprend au moins un premier réseau tronconique de faisceaux de poils (166) et un second réseau tronconique de faisceaux de poils (174), concentriques au support annulaire (140, 142), dans laquelle les faisceaux de poils du premier réseau annulaire (166) ont une première section transversale polygonale (172) et le second réseau annulaire de faisceaux de poils (174) a une seconde section transversale polygonale (180), et dans laquelle les première et seconde sections transversales polygonales sont différentes.

11. Tête de brosse à dents (104) selon la revendication 10, dans laquelle les faisceaux de poils (166, 174, 182, 190) sont disposés en quatre réseaux tronconiques, concentriques au support annulaire (140, 142), et les faisceaux de chaque réseau concentrique sont munis d'une section transversale polygonale (172, 180, 188, 192) qui est différente des faisceaux des autres réseaux.

12. Tête de brosse à dents (104) selon la revendication 10 ou la revendication 11, dans laquelle les sections transversales polygonales (172, 180, 188, 192) des faisceaux de poils (166, 174, 182, 190) à leurs extrémités proximales (168, 176, 184, 192) permettent la formation d'un polyèdre hémisphérique faiblement compacté (198).

13. Brosse à dents électrique (100) comprenant une tête de brosse à dents (104) selon l'une quelconque des revendications 1 à 12.
